(19) Europäisches Patentamt
European Patent Office
Office européen des brevets

(11) **EP 2 290 654 A1**

(12) **EUROPEAN PATENT APPLICATION**
published in accordance with Art. 153(4) EPC

(43) Date of publication:
**02.03.2011 Bulletin 2011/09**

(51) Int Cl.:
**G11B 20/10** *(2006.01)*　　**G11B 27/034** *(2006.01)*
**H04N 5/76** *(2006.01)*

(21) Application number: **09746496.0**

(22) Date of filing: **28.04.2009**

(86) International application number:
**PCT/JP2009/058312**

(87) International publication number:
**WO 2009/139289 (19.11.2009 Gazette 2009/47)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **16.05.2008　JP 2008129587**

(71) Applicant: **Sharp Kabushiki Kaisha**
**Osaka-shi, Osaka 545-8522 (JP)**

(72) Inventors:
• **TAKAO, Hiroshi**
**Osaka-shi, Osaka 545-8522 (JP)**
• **KAKAMI, Masayasu**
**Osaka-shi, Osaka 545-8522 (JP)**

(74) Representative: **Müller - Hoffmann & Partner**
**Patentanwälte**
**Innere Wiener Strasse 17**
**81667 München (DE)**

(54) **RECORDING APPARATUS**

(57)　A recording apparatus performs bit rate conversion on an input stream and records the input stream with additional data such as captions and a weather forecast left therein into a recording medium in consideration of the remaining capacity thereof. A recording apparatus (10) performs bit rate conversion on an input stream including video data, voice data and additional data and records the converted input stream. The recording apparatus (10) comprises a control portion (15) which calculates a target total bit rate which is a target of the input stream on the basis of the recording time of the input stream and the remaining capacity of the recording medium and sets a target bit rate of the video data with respect to the calculated target total bit rate and a transcoder (13) which measures an actual total bit rate of the input stream after starting the bit rate conversion on the basis of the target bit rate of the video data. The control portion (15) adjusts the target bit rate of the video data on the basis of the difference between the actual total bit rate and the target total bit rate so that the input stream including the additional data may fall within the remaining capacity of the recording medium.

FIG. 1

EP 2 290 654 A1

**Description**

TECHNICAL FIELD

The present invention relates to a recoding apparatus, and, more particularly, to a recording apparatus having a function of changing a bit rate of an input stream to record the input stream changed in bit rate.

BACKGROUND ART

A high-definition recorder, etc., around in these years is known as a recorder capable of recording digital broadcasting, such as ground-wave digital broadcasting and BS digital broadcasting, directly on an HDD (Hard Disc Drive) and reproducing the digital broadcasting. Such digital broadcasting include a data-connected component (hereinafter "additional data"), such as subtitles and weather reports, in addition to audio/video, and the additional data is recorded simultaneously with audio/video so that the additional data can be reproduced and viewed upon reproduction of audio/video.

For example, patent Document 1 describes a technique for recording/reproducing not only such additional data but also data broadcasting, broadcasting other than data broadcasting, and streams having relevant data other than broadcasting data. According to this technique, a data broadcast, etc., is recorded by separating a broadcast-recording file from a broadcast-related file, and the recorded data broadcast is saved and edited in separation from main broadcasting.

Among such recorders, a certain type of recorder does not record broadcasting waves in their original form but records broadcasting waves after changing their bit rate while keeping their MPEG-2 format intact or after changing their audio/video format, thus being able to record a greater volume of contents.

A transcoding method is known as one of methods of bit rate change. The transcoding method enables recording at a compression ratio of 1/2 to 1/5, compared to the MPEG-2-based compression method, thus allowing recording of video data for a longer time of viewing while leaving the capacity of an HDD or optical disc as it is. Transcoding is a process of transforming video data, etc., compressed (coded) in a file format, into video data in another coding format or changing only the coding data rate (bit rate) of the video data, being used principally for moving picture transformation. Recently, household appliance manufactures have been putting new DVDs on the market, which DVDs have a function of real-time transcoding HDTV video data in the MPEG-2 format transmitted in ground-wave digital broadcasting into MPEG-4AVC/H264 (hereinafter "H264") format data.

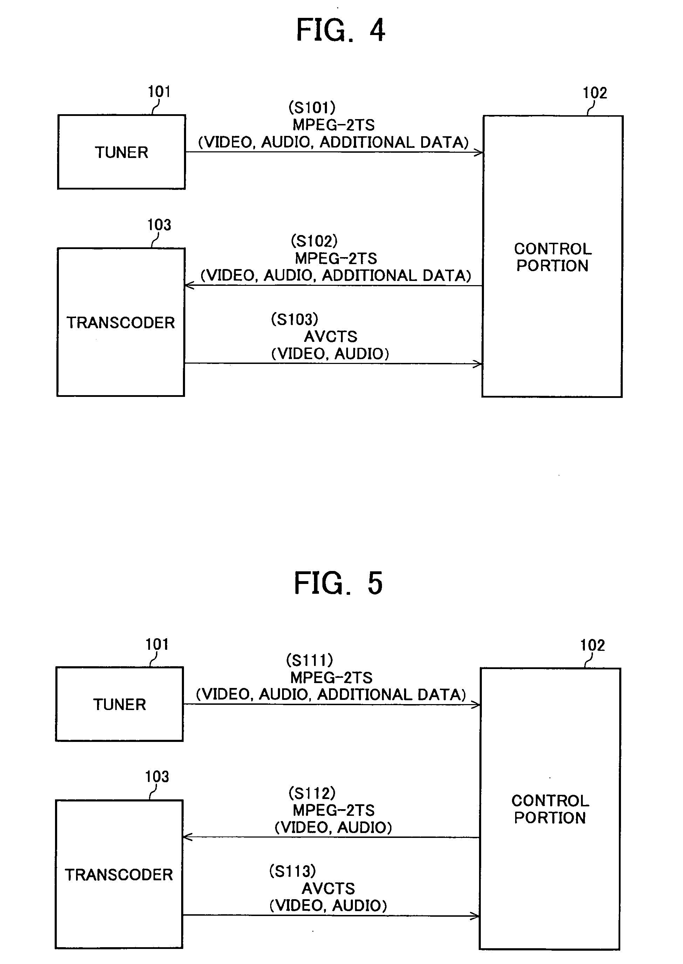

When bit rate change is carried out by this transcoding method, however, only the audio/video is subject to bit rate change, and data other than audio/video (additional data, etc.) usually does not survive. Specifically, additional data included in broadcasting waves, such as subtitles and various pieces of information, can be reproduced for use in a DR (Direct Recording) mode for recording the broadcasting waves directly onto an HDD, but is discarded when the broadcasting waves are encoded again in the H264 format and are recorded, in which case the additional data cannot be reproduced for use. This problem will be described referring to Figs. 5 and 6.

Figs. 4 and 5 are explanatory diagrams of a bit rate change process by a conventional recording apparatus. In Figs. 4 and 5, 101 denotes a tuner, 102 denotes a control portion, and 103 denotes a transcoder. In Figs. 4 and 5, the recording apparatus is a recorder, of which a principal part configuration only is described.

In Fig. 4, the tuner 101 inputs an MPEG-2TS (Transport Stream) to the control portion 102 (S101). The MPEG-2TS is composed mainly of video data, audio data, and additional data. The control unit 102 outputs the MPEG-2TS including the additional data to the transcoder 103 (S102). The transcoder 103 then outputs an AVC (Advanced Video Coding) TS consisting only of video and audio to the control portion 102 (S103). In this process, the transcoder 103 discards the additional data.

A configuration of Fig. 5 is the same as the configuration of Fig. 4 except a difference in that the control portion 102 discards additional data. The tuner 101 inputs an MPEG-2TS to the control portion 102 (S111). The MPEG-2TS is composed mainly of video data, audio data, and additional data. The control unit 102 outputs the MPEG-2TS not including the additional data to the transcoder 103 (S112). The transcoder 103 then outputs an AVCTS consisting only of video and audio to the control portion 102 (S113). In this process, the control portion 102 discards the additional data.

PRIOR ART DOCUMENT

PATENT DOCUMENT

Patent Document 1: Japanese Laid-Open Patent Publication No. 2005-323325

SUMMARY OF THE INVENTION

PROBLEMS TO BE SOLVED BY THE INVENTION

According to the technique of the patent document 1, additional data can be saved and edited without being discarded. When data streams are transcoded for recoding on a BD (Blu-ray Disc), DVD, etc., without discarding additional data, however, the data size of the additional data varies depending on channels and programs to make accurate bit rate estimation impossible, which leads to a problem that data streams cannot be recorded with consideration being given to a remaining capacity of the BD and of the DVD. This problem will be described in the following.

To reproduce the data-connected component (additional data) for use, recording a TS file including the additional data component is recommendable. Holding the additional data using a transcoder, for example, is a conceivable method. The TS file includes main components of video data, audio data, and additional data. The bit rate of the audio data among these data is 0.2 to 0.4 Mbps in the AAC format, which is extremely small.

A case is assumed where a plurality of contents recorded on an HDD in the DR mode are dubbed onto a BD. In the case of the conventional technique (i.e., case of discarding additional data), a bit rate is specified by the following method so that the contents are stored in a spare (remaining) capacity of the BD.

For example, when the spare capacity of the BD is 10 GBytes and the contents to be dubbed take 2 hours for dubbing, an expected total bit rate A (Mbps) is calculated by the following manner.

$$A \times 60 \times 60 \times 2 = 10 \times 8 \times 1024 \times 1024 \times 1024$$

It follows from this equation that

$$A = (10 \times 8 \times 1024 \times 1024 \times 1024) / (60 \times 60 \times 2)$$
$$= 11930464.7$$
$$= 11.9 \ (Mbps)$$

Determining the total bit rate A to be 11.9 Mbps, therefore, allows storing the contents with the recoding time of 2 hours in the spare capacity (10 GBytes) of the BD. In this case, if the bit rate of audio data is determined to be 0.4 Mbps, a target bit rate of video data is set to 11.5 Mbps. In this manner, efficient dubbing making the best use of the spare capacity of the BD becomes possible. A recorder having such large-capacity media as HDD and BD is designed so that a target bit rate is determined in the above manner to cause the bit rate to converge within a certain time (in the order of several minutes).

If an additional data component is added in the above case, however, dubbing contents to fit them exactly in the spare capacity of the BD becomes difficult. This is because that the bit rate of additional data cannot be estimated in advance as the bit rate of audio data is. For example, when the bit rate of (additional data+audio data) is determined to be 5.0 Mbps in the above case, a target bit rate of video data is set to 11.9-5.0=6.9 Mbps. If, however, the bit rate of (additional data+audio data) is actually 6.0 Mbps, the total bit rate is 6.0+6.9=12.9 Mbps, which indicates a situation where the contents are not stored completely in the spare capacity of the BD (11.9 Mbps, 10 Gbytes). Contrary to that, if the bit rate of the data component (additional data+audio data) is actually 1.0 Mbps, an unused capacity is left over, which is calculated at (11.9-7.9)/11.9x10=3.36 GBytes.

The present invention was conceived in view of the above circumstances, and it is therefore the object of the present invention to provide a recording apparatus that when changing the bit rate of an input stream to record the input stream changed in bit rate on a recording medium, carries out recording while keeping additional data, such as subtitles and weather reports, intact and considering a spare capacity of the recording medium.

MEANS FOR SOLVING THE PROBLEMS

To solve the problems, a first technical means of the present invention is a recording apparatus that changes a bit rate of an input stream including video data, audio data, and additional data to record the input stream change in bit rate, comprising: a video target bit rate setting means that calculates a target total bit rate of the input stream based on a recording time of the input stream and a spare capacity of a recording medium on which the input stream is recorded, the video target bit rate setting means setting a target bit rate of the video data for the calculated target total bit rate;

and a total bit rate measuring means that calculates an actual total bit rate of the input stream after the start of bit rate change based on the target bit rate of the video data, wherein the video target bit rate setting means adjusts the target bit rate of the video data so that the input stream including the additional data is stored in the spare capacity of the recording medium, based on a difference between the actual total bit rate and the target total bit rate.

A second technical means is the recording apparatus as defined in the first technical means, wherein when the actual total bit rate is larger than the target total bit rate, the video target bit rate setting means lowers a target bit rate of the video data by a difference between the actual total bit rate and the target total bit rate.

A third technical means is the recording apparatus as defined in the first technical means, wherein when the actual total bit rate is smaller than the target total bit rate, the video target bit rate setting means raises a target bit rate of the video data by a difference between the actual total bit rate and the target total bit rate.

A fourth technical means is the recording apparatus as defined in any one of the first to third technical means, wherein the target total bit rate is composed of a target bit rate of the video data and an estimated bit rate set on the audio data and the additional data.

A fifth technical means is the recording apparatus as defined in any one of the first to fourth technical means, wherein when changing a target bit rate of the video data, the video target bit rate setting means repeatedly adjusts the target bit rate by a given rate at every given time to cause the actual total bit rate to converge onto the target total bit rate.

A sixth technical means is the recording apparatus as defined in any one of the first to fifth technical means, wherein the total bit rate measuring means counts number of packets of the input stream, multiplies the counted number of packets by a data size per packet, and divides a data size given by the multiplication by a recording time of the input stream to calculate an actual total bit rate of the input stream.

EFFECT OF THE INVENTION

According to the present invention, when an input stream changed in bit rate is recorded on a recording medium, the input stream is recorded as additional data, such as subtitles and weather reports, is kept intact and a spare capacity of the recording medium is considered. This allows video data, audio data, and additional data to be efficiently stored in the spare capacity of the recording medium.

BRIEF DESCRIPTION OF DRAWINGS

[Fig. 1] Fig. 1 is a block diagram of a configuration example of a recording apparatus according to one embodiment of the present invention;
[Fig. 2] Fig. 2 is an explanatory diagram of an example of a bit rate change process by the recording apparatus of the present invention;
[Fig. 3] Fig. 3 is an explanatory diagram of a working example in which contents (TS file) recorded on an HDD in a DR mode are changed in bit rate and are dubbed onto a BD;
[Fig. 4] Fig. 4 is an explanatory diagram of a bit rate change process by a conventional recording apparatus; and
[Fig. 5] Fig. 5 is an explanatory diagram of a bit rate change process by a conventional recording apparatus.

EMBODIMENTS OF THE INVENTION

Preferred embodiments of a recording apparatus of the present invention will now be described with reference to the accompanying drawings.

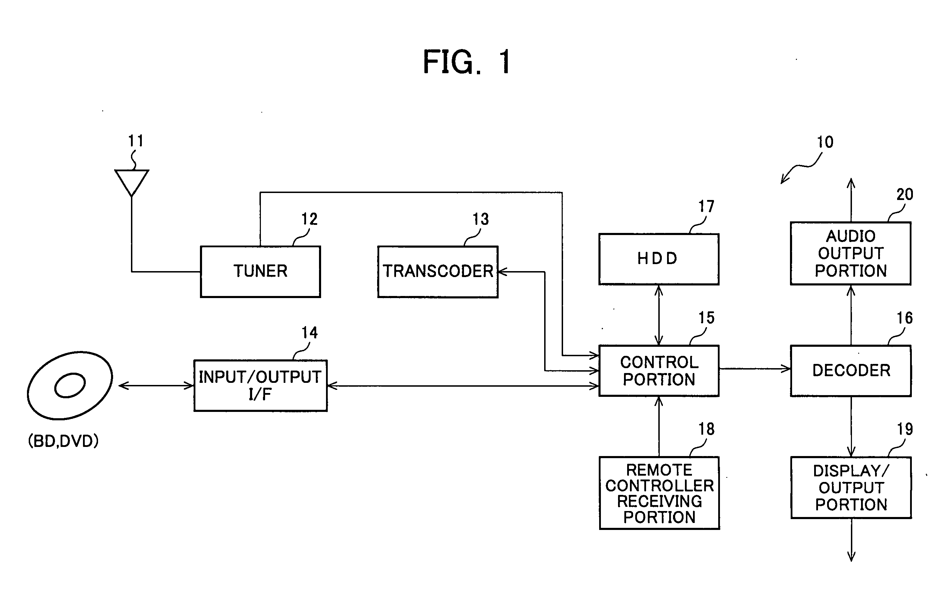

Fig. 1 is a block diagram of a configuration example of a recording apparatus according to one embodiment of the present invention. A recording apparatus 10 includes a tuner 12, a transcoder 13, an input/output interface (input/output I/F) 14 that inputs/outputs (writes/reads) data to/from an external recording medium (BD, DVD, etc.) attached thereto, a control portion 15 composed of a CPU, ROM, etc. , that controls overall processing by the apparatus, a decoder 16, an HDD (Hard Disc Drive) 17, a remote controller receiving portion 18 having a light-receiving portion that receives an optical operation signal from an operation input portion provided as a remote controller, etc., a display/output portion 19 that outputs a stream received via an antenna 11 or a video-recorded stream to an externally connected display device not depicted (such a display means as CRT device, plasma display, liquid crystal display, and organic/nonorganic EL device) , and an audio output portion 20 connected to a speaker of the display device, an external speaker, etc.

The recording apparatus of Fig. 10 has a configuration capable of receiving both analog broadcasting waves and digital broadcasting waves, but may have a configuration capable of receiving only one of the analog broadcasting waves and the digital broadcasting waves. The recording apparatus 10 can be used as, for example, a hard disc recorder, BD (Blu-Ray) recorder, or DVD recorder having a digital tuner built therein, a BD recorder or DVD recorder having a hard disc integrated therein, a hard disc recorder, BD recorder, or DVD recorder to which an external tuner is connectible, and a BD recorder or DVD recorder having a hard disc integrated therein. When an external digital tuner, such as STB (Set Top Box), is connected to the recording apparatus, the tuner 12 may be dispensed with.

While an HD (Hard Disc) and such a portable recording medium as BD and DVD are applicable as a recording medium, the recording medium is not limited to these mediums. Every recording medium capable of recording streams is applicable to the recording apparatus. A stream is, for example, an MPEG-2TS, which is composed mainly of video data, audio data, and additional data. The additional data is additional data (text, image) other than video/audio data, and includes, for example, subtitles, weather reports, etc.

When a digital broadcast is viewed using the recording apparatus 10, the tuner 12 demodulates a high-frequency signal (digital modulated signal) coming in through the antenna 11 to input the demodulated signal to the decoder 16. The decoder 16 decodes the input demodulated signal into a video signal and an audio signal, and then generates a display control output signal from the decoded signal to output the display control output signal to the display/output portion 19 while generates an audio control output signal from the decoded signal to output the audio control output signal to the audio output portion 20. The display control output signal coming out of the display/output portion 19 is input to a display device, such as a TV set, connected to the recording apparatus 10, while the audio control output signal coming out of the audio output portion 20 is input to a speaker of the display device connected to the recording apparatus 10. The user is thus able to view a digital broadcasting program corresponding to the display control output signal and audio control output signal on a display screen and the speaker incorporated in the display device.

When an analog broadcasting program is recorded using the recording apparatus 10, the tuner 12 demodulates a high-frequency signal (analog modulated signal) coming in through the antenna 11 to encode the demodulated signal through an encoder (not depicted). The tuner 12 then transforms the encoded data into data of a format adapted for recording (stream) to record the data on various recoding media, such as the HDD 17 and BD, as video-recorded data. When a digital broadcasting program is recorded using the recording apparatus 10, the tuner 12 demodulates a high-frequency signal (digital modulated signal) coming in through the antenna 11 and records the demodulated signal on various recoding media, such as the HDD 17 and BD.

When a program title video-recorded on the HDD 17, BD, etc. , is reproduced by the recording apparatus 10, the decoder 16 decodes data video-recorded on the HDD 17, BD, etc., and then transforms the decoded data into data of a format for video output to output the data to the display/output portion 19 while transforms the decoded data into data of a format for audio output to output the data to the audio output portion 20. A display control output signal coming out of the display/output portion 19 is input to the display device, such as a TV set, connected to the recording apparatus 10, while an audio control output signal coming out of the audio output portion 20 is input to the speaker of the display device connected to the recording apparatus 10. The user is thus able to view a video-recorded title corresponding to the display control output signal and audio control output signal on the display screen and the speaker incorporated in the display device.

Having the transcoder 13, the recording apparatus 10 is capable of not recording digital broadcasting waves (input streams) directly on the HDD 17, BD, etc., but recording the broadcasting waves after changing their bit rate while keeping their MPEG-2TS format intact or after changing their video data format or audio data format. For example, the recording apparatus 10 is able to real-time transcode HDTV video data in the MPEG-2TS format transmitted in ground-wave digital broadcasting into MPEG-4AVC/H264 format data.

The main feature of the present invention is to carry out recording while keeping additional data, such as subtitles and weather reports, intact and considering a spare capacity of a recording medium when changing a bit rate of an input stream to record the input stream changed in bit rate on the recording medium. To achieve a configuration for this, the recording apparatus 10 includes the control portion 15 equivalent to a video target bit rate setting means that calculates a target total bit rate of an input stream based on a recording time of the input stream and a spare capacity of a recording medium (HDD 17, BD, etc.) on which the input stream is recorded and that sets a target bit rate of video data for the calculated target total bit rate, and the transcoder 13 equivalent to a total bit rate measuring means that calculates an actual total bit rate of the input stream after the start of bit rate change based on the target bit rate of the video data. The control portion 15 adjusts the target bit rate of the video data so that the input stream including the additional data is stored exactly in the spare capacity of the recording medium, based on a difference between the actual total bit rate and the target total bit rate.

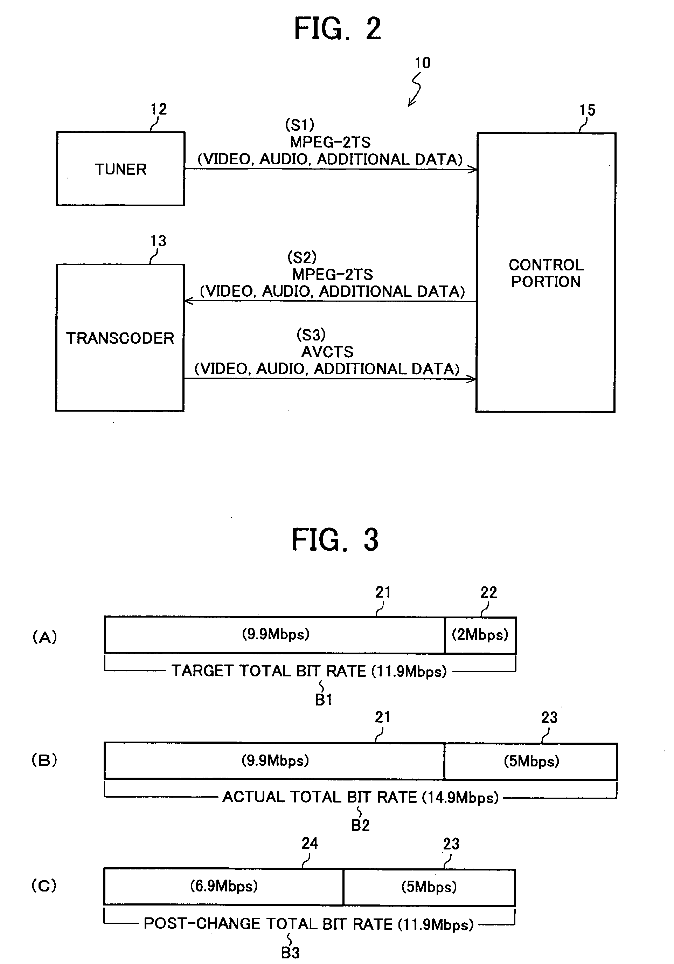

Fig. 2 is an explanatory diagram of an example of a bit rate change process by the recording apparatus 10 of the present invention. The recording apparatus 10 serves as a recorder, and only the principal part configuration (tuner 12, transcoder 13, control portion 15) of the recording apparatus 10 is depicted. In this example, because the transcoder 13 is connected to the control portion 15 in the form of PCI (Peripheral Components Interconnect), a TS from the tuner 12 invariably goes through the control portion 15. Another example of a system connection, however, may be provided such that a TS from the tuner 12 is received directly by the transcoder 13 which is connected to the control portion 15 for TS input/output.

In Fig. 2, the tuner 12 inputs a MPEG-2TS (Transport Stream) to the control portion 15 (S1). The MPEG-2TS is composed mainly of video data, audio data, and additional data. The control portion 15 outputs the MPEG-2TS including the additional data to the transcoder 13 (S2). The transcoder 13 then outputs an AVCTS composed of the video data, audio data, and additional data to the control portion 15 (S3). The control portion 15 records the AVCTS compressed by the transcoder 13 on the HDD 17 or BD. In this manner, the AVCTS compressed by the transcoder 13 includes the additional data, which means that the additional data is not discarded by bit rate change.

A working example of changing a bit rate of contents (TS file) recorded in the DR mode on the HDD 17 and dubbing the contents on the BD will then be described referring to Fig. 3.

In Fig. 3, 21 denotes a target bit rate of video data (hereinafter "video target bit rate"), 22 denotes an estimated bit rate of (audio data+additional data) (hereinafter "audio/additional estimated bit rate"), 23 denotes an actual bit rate of the (audio data+additional data) (hereinafter "audio/additional actual bit rate"), and 24 denotes a post-change bit rate of the video data having undergone bit rate change (hereinafter "video post-change bit rate"). A condition for dubbing is the same as the condition in the conventional case where a spare capacity of the BD is 10 GBytes and a recording time of the contents is 2 hours.

In the above description, the recording time of the contents is the time required for recording the contents, and is acquired, for example, from SI (Service Information) added to the contents, an electronic program list, etc. The spare capacity of the recording medium means the spare capacity available for recording in the HDD 17 or BD, which is under control by the control portion 15. The spare capacity does not always have to be the whole of the spare capacity of the recording medium, but may be part of the spare capacity. For example, when the total capacity of the BD is 20 GBytes, 10 GBytes out of 20 GBytes may be determined to be the spare capacity.

The relation between a target total bit rate B1 of Fig. 3 (A) , an actual total bit rate B2 of Fig. 3(B), and a post-change total bit rate B3 of Fig. 3(C) is as follows.

```
Target total bit rate=video target bit rate+audio/additional
estimated bit rate            (1)
```

```
Actual total bit rate=video target bit rate+audio/additional
actual bit rate            (2)
```

```
Post-change   total   bit   rate=video   post-change   bit
rate+audio/additional actual bit rate                 (3)
```

In Fig. 3, at the start of dubbing, the recording apparatus 10 sets the audio/additional estimated bit rate 22 for the audio data and additional data. In this example, the audio/additional estimated bit rate 22 is set to 2. 0 Mbps. This audio/additional estimated bit rate 22 is a temporary set value for determining the video target bit rate 21. For example, actual bit rates of (audio data+additional data) may be measured on various contents to set the average of the measurements as the audio/additional estimated bit rate 22.

Subsequently, based on the recording time of the contents and the spare capacity of the BD on which the contents are recorded, the target total bit rate B1 of the contents is calculated, and the video target bit rate 21 is set for the calculated target total bit rate B1. In this example, with the recording time of the contents determined to be 2 hours and the spare capacity of the BD determined to be 10 GBytes, as in the above description, the target total bit rate B1 is calculated at 11.9 Mbps. The video target bit rate 21 is calculated by subtracting the audio/additional estimated bit rate 22 from the target total bit rate B1. Hence, in this example, the video target bit rate 21 is determined to be 11.9-2.0=9.9 Mbps. This bit rate relation is depicted in Fig. 3(A).

Subsequently, the recording apparatus 10 measures the actual total bit rate B2 at about a time at which the bit rate converges after an elapse of a given time (approximately 10 minutes) from the start of bit rate change based on the video target bit rate 21. The following methods are conceivable as methods of calculating the actual total bit rate B2.

(a) The transcoder 13 calculates the actual total bit rate B2, i.e., the total bit rate of the AVCTS to report the calculated actual total bit rate B2 regularly to the control portion 15.
(b) The transcoder 13 calculates the actual total bit rate B2 to write the actual total bit rate B2 to an internal register, and the control portion 15 reads the actual total bit rate B2 in proper timing out of the internal register.
(c) The control portion 15 counts data (AVCTS) from the transcoder 13, and divides the file size of data accumulated from the start of video-recoding by a recording time to calculate the actual total bit rate B2.

(d) The control portion 15 counts the number of content packets transferred by DMA (Direct Memory Access) transfer and multiplies the counted number of packets by a data size per packet transfer (data size of each packet) to calculate a file size, and divides the file size by a recording time of the TS file to calculate the actual total bit rate B2.

In the cases of (a) and (b), the transcoder 13 functions as a total bit rate measuring means. In the cases of (c) and (d), the control portion 15 functions as the total bit rate measuring means, thus able to calculate the actual total bit rate B2 even if failing to receive a report of the actual total bit rate B2 from the transcoder 13.

In this manner, the actual total bit rate B2 is calculated, and the video target bit rate 21 is subtracted from the actual total bit rate B2 to give the audio/additional actual bit rate 23. In this example, the actual total bit rate B2 is 14.9 Mbps, from which the video target bit rate 21 of 9.9 Mbps is subtracted to calculate the audio/additional actual bit rate 23 at 5.0 Mbps. That is, the audio/additional actual bit rate 23 is equivalent to a difference between the actual total bit rate B2 and the video target bit rate 21, and this difference is regarded as the bit rate of the audio/additional data component. This bit rate relation is depicted in Fig. 3(B).

Figs. 3(A) and 3(B) leads to an estimation that the contents are not stored completely in the spare capacity of the BD when the actual total bit rate B2 is larger than the target total bit rate B1. In such a case, the control portion 15 makes adjustment to lower the video target bit rate 21 by a difference between the actual total bit rate B2 and the target total bit rate B1, that is, a difference between the audio/additional actual bit rate 23 and the audio/additional estimated bit rate 22. In this example, the audio/additional actual bit rate 23 is 5 Mbps and the audio/additional estimated bit rate 22 is 2 Mbps, so that the difference between both bit rates is 3 Mbps. This difference of 3 Mbps is subtracted from the video target bit rate 21 of 9.9 Mbps. Hence the video target bit rate 21 is lowered to 6.9 Mbps, which makes the post-change total bit rate B3 equal to the target total bit rate B1. As a result, the contents with the recording time of 2 hours including the additional data can be stored in full use of the spare capacity (10 GBytes) of the BD. This bit rate relation is depicted in Fig. 3(C).

When the video target bit rate 21 is lowered to 6.9 Mbps, rapidly lowering the bit rate results in a sharp deterioration in image quality, which gives the user a strange feeling. It is, therefore, preferable to take a devised approach, such as lowering the bit rate by 0.5 Mbps for every 2 minutes, to carry out bit rate matching. Following bit rate matching, the actual total bit rate B2 is monitored continuously to carry out dubbing to store the contents completely in the spare capacity of the BD in the end.

Contrary to the above example, when the actual total bit rate B2 is smaller than the target total bit rate B1 and the contents are estimated to be well within the spare capacity of the BD, the control portion 15 makes adjustment to raise the video target bit rate 21 by a difference between the audio/additional actual bit rate 23 and the audio/additional estimated bit rate 22. For example, when the audio/additional actual bit rate 23 is 1 Mbps, since the audio/additional estimated bit rate 22 is 2 Mbps, the difference between both bit rates is calculated at 1 Mbps. This difference of 1 Mbps is added to the video target bit rate 21 of 9.9 Mbps. Hence the video target bit rate 21 is raised to 10.9 Mbps, which makes the post-change total bit rate B3 equal to the target total bit rate B1. As a result, the contents with the recording time of 2 hours including the additional data can be stored in full use of the spare capacity (10 GBytes) of the BD.

In this case, raising the video target bit rate 21 from 9. 9 Mbps to 10.9 Mbps increases the volume of information, thus improves the image quality. Raising the bit rate all at once, therefore, may be allowed. Nevertheless, to avoid giving the user a strange feeling, for example, a devised approach, such as raising the bit rate by 0.5 Mbps for every 2 minutes, may be taken to carry out bit rate matching. Following bit rate matching, the actual total bit rate B2 is monitored continuously, as in the above example, to carry out dubbing to store the contents completely in the spare capacity of the BD in the end.

In this manner, when the video target bit rate 21 is changed, the control portion 15 repeatedly adjusts the video target bit rate 21 by a given rate at every given time (by a feedback process) to be able to cause the actual total bit rate B2 to converge onto the target total bit rate B1 in the end. By repeatedly carrying out the process of adjusting the video target bit rate 21, the contents changed in bit rate including the additional are stored precisely in the spare capacity of the BD in carrying the optimum dubbing.

While the case of storing contents including additional data in full use of a spare capacity of a recording medium has been described so far, this is not the only case. For example, a bit rate may be adjusted so that the contents including additional data are stored in part of the spare capacity of the recording medium.

According to the present invention, contents changed in bit rate including additional data can be stored precisely in a spare capacity set in a recording medium, such as HDD, BD, and DVD. This allows a user to reproduce the additional data for use and enables accurate control of the spare capacity of the recording medium.

EXPLANATIONS OF REFERENCE NUMERALS

| | |
|---|---|
| 1 | recording medium |
| 11 | antenna |
| 12 | tuner |
| 13 | transcoder |
| 14 | input/output I/F |
| 15 | control portion |
| 16 | decoder |
| 17 | HDD |
| 18 | remote controller receiving portion |
| 19 | display/output portion |
| 20 | audio output portion |

**Claims**

1. A recording apparatus that changes a bit rate of an input stream including video data, audio data, and additional data to record the input stream change in bit rate, comprising:

   a video target bit rate setting means that calculates a target total bit rate of the input stream based on a recording time of the input stream and a spare capacity of a recording medium on which the input stream is recorded, the video target bit rate setting means setting a target bit rate of the video data for the calculated target total bit rate; and
   a total bit rate measuring means that calculates an actual total bit rate of the input stream after the start of bit rate change based on the target bit rate of the video data, wherein
   the video target bit rate setting means adjusts the target bit rate of the video data so that the input stream including the additional data is stored in the spare capacity of the recording medium, based on a difference between the actual total bit rate and the target total bit rate.

2. The recording apparatus as defined in claim 1, wherein
   when the actual total bit rate is larger than the target total bit rate, the video target bit rate setting means lowers a target bit rate of the video data by a difference between the actual total bit rate and the target total bit rate.

3. The recording apparatus as defined in claim 1, wherein
   when the actual total bit rate is smaller than the target total bit rate, the video target bit rate setting means raises a target bit rate of the video data by a difference between the actual total bit rate and the target total bit rate.

4. The recording apparatus as defined in any one of claims 1 to 3, wherein
   the target total bit rate is composed of a target bit rate of the video data and an estimated bit rate set on the audio data and the additional data.

5. The recording apparatus as defined in any one of claims 1 to 4, wherein
   when changing a target bit rate of the video data, the video target bit rate setting means repeatedly adjusts the target bit rate by a given rate at every given time to cause the actual total bit rate to converge onto the target total bit rate.

6. The recording apparatus as defined in any one of claims 1 to 5, wherein
   the total bit rate measuring means counts number of packets of the input stream, multiplies the counted number of packets by a data size per packet, and divides a data size given by the multiplication by a recording time of the input stream to calculate an actual total bit rate of the input stream.

# FIG. 1

EP 2 290 654 A1

# FIG. 2

10

| 12 | (S1)<br>MPEG-2TS<br>(VIDEO, AUDIO, ADDITIONAL DATA) | 15 |
|---|---|---|
| TUNER | → | CONTROL<br>PORTION |

13

| TRANSCODER | (S2)<br>MPEG-2TS<br>(VIDEO, AUDIO, ADDITIONAL DATA) ← |
|---|---|
| | (S3)<br>AVCTS<br>(VIDEO, AUDIO, ADDITIONAL DATA) → |

# FIG. 3

21          22

(A)

| (9.9Mbps) | (2Mbps) |
|---|---|

└── TARGET TOTAL BIT RATE (11.9Mbps) ──┘

B1

21                    23

(B)

| (9.9Mbps) | (5Mbps) |
|---|---|

└── ACTUAL TOTAL BIT RATE (14.9Mbps) ──┘

B2

24          23

(C)

| (6.9Mbps) | (5Mbps) |
|---|---|

└── POST-CHANGE TOTAL BIT RATE (11.9Mbps) ──┘

B3

# FIG. 4

101

TUNER

(S101)
MPEG-2TS
(VIDEO, AUDIO, ADDITIONAL DATA)

102

CONTROL
PORTION

103

TRANSCODER

(S102)
MPEG-2TS
(VIDEO, AUDIO, ADDITIONAL DATA)

(S103)
AVCTS
(VIDEO, AUDIO)

# FIG. 5

101

TUNER

(S111)
MPEG-2TS
(VIDEO, AUDIO, ADDITIONAL DATA)

102

CONTROL
PORTION

103

TRANSCODER

(S112)
MPEG-2TS
(VIDEO, AUDIO)

(S113)
AVCTS
(VIDEO, AUDIO)

| **INTERNATIONAL SEARCH REPORT** | International application No. |
|---|---|
| | PCT/JP2009/058312 |

A.   CLASSIFICATION OF SUBJECT MATTER
*G11B20/10*(2006.01)i, *G11B27/034*(2006.01)i, *H04N5/76*(2006.01)i

According to International Patent Classification (IPC) or to both national classification and IPC

B.   FIELDS SEARCHED

Minimum documentation searched (classification system followed by classification symbols)
G11B20/10, G11B27/034, H04N5/76

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | JP 2001-256727 A  (Victor Company Of Japan, Ltd.),<br>21 September, 2001 (21.09.01),<br>Full text (particularly, Par. Nos. [0006], [0040]), Figs. 1 to 5<br>(Family: none) | 1-6 |

| ☐ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 June, 2009 (15.06.09) | 23 June, 2009 (23.06.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005323325 A